# EUROPÄISCHE PATENTSCHRIFT

(11) **EP 2 979 261 B1**
(45) Veröffentlichungstag und Bekanntmachung des Hinweises auf die Patenterteilung: **14.08.2019**
(21) Anmeldenummer: 14711783.2
(22) Anmeldetag: 24.03.2014
(51) Int. Cl.: G08G 1/01, G08G 1/09, G08G 1/0967, G08G 1/14, G01C 21/32

(54) **BACKEND FÜR FAHRERASSISTENZSYSTEME**
BACKEND FOR DRIVER ASSISTANCE SYSTEMS
ÉTAGE DE SORTIE POUR SYSTÈMES D'AIDE À LA CONDUITE

(30) Priorität: 27.03.2013 DE 102013205392
(43) Veröffentlichungstag der Anmeldung: 03.02.2016
(73) Patentinhaber: Bayerische Motoren Werke Aktiengesellschaft, 80809 München (DE)
(72) Erfinder: KLANNER, Felix, 639664 Singapore (SG); KLÖDEN, Horst, 80797 München (DE)
(86) Internationale Anmeldenummer: PCT/EP2014/055803
(87) Internationale Veröffentlichungsnummer: WO 2014/154614

(56) Entgegenhaltungen:
- EP-A2- 2 043 071
- EP-A2- 2 043 071
- DE-A1- 10 210 546
- DE-A1- 10 210 546
- DE-A1-102011 106 295
- DE-A1-102011 106 295
- DE-A1-102012 007 367
- DE-A1-102012 007 367
- GB-A- 2 481 659
- GB-A- 2 481 659
- US-A1- 2007 063 875
- US-A1- 2007 063 875
- US-A1- 2009 070 031
- US-A1- 2009 070 031
- US-A1- 2012 064 858
- US-A1- 2012 064 858
- US-A1- 2012 280 835
- US-A1- 2012 280 835

## Beschreibung

Die vorliegende Erfindung betrifft das Gebiet der Fahrerassistenzsysteme und insbesondere ein Verfahren und eine Backendeinrichtung zum Bereitstellen von Informationen für Fahrerassistenzfunktionen von Fahrzeugen.

Moderne Kraftfahrzeuge weisen eine zunehmend große Anzahl verschiedener Fahrerassistenzfunktionen auf, die den Fahrer eines Fahrzeuges bei der Routenplanung und bei der Führung des Fahrzeuges unterstützen. Zur Ausführung der entsprechenden Fahrerassistenzfunktionen wird auf Informationen zurückgegriffen, die mittels Sensoren gewonnen werden, die im und am Fahrzeug angeordnet sind, sowie auf Informationen, die von Backendeinrichtungen bereitgestellt und an die Fahrzeuge übertragen werden.

Im Dokument US 2012/0280835 A1 wird ein Verfahren beschrieben zum Bereitstellen eines fortschrittlichen Hinweises an einen Fahrer, dass ein Straßenabschnitt, der seine Aufmerksamkeit erfordern wird, auf seiner Fahrtroute liegt. Innerhalb des Verfahrens wird die Position des Fahrzeugs erfasst und mit einer in einem Server gespeicherten Datenbank verglichen. Es werden Daten zum Fahrzeugzustand an den Server gesendet und mit Daten zu Fahrzuständen in der Datenbank verglichen.

Aus dem Dokument US 2009/0070031 ist bekannt, auf einem Server eine Kartendatenbank zu betreiben, um Kartendaten an Navigationssysteme in Fahrzeugen bereitzustellen. Das Dokument beschreibt auch ein automatisches Aktualisieren der Karteninformation, indem die Bewegungen eines Fahrzeugs aufgezeichnet werden. So kann das Vorhandensein oder die Abwesenheit einer Ampel oder eines Stoppschilds an einer Kreuzung abgeleitet werden aus der Art und Weise, wie sich das Fahrzeug an der Kreuzung bewegt, und die auf diese Weise gewonnene Informationen kann als neue Informationen der Kartendatenbank hinzugefügt werden.

Aus dem Dokument DE 10 2012 007 367 A1 ist weiter bekannt, in einem Navigationssystem Verkehrsinformationen, wie Positionen von Staufronten, Staulängen, oder Staufrontengeschwindigkeiten, und Wetterinformation zu verwenden, wie Positionen von Unwetterfronten, Glatteisgebieten, oder Unwetterfrontgeschwindigkeiten. Dabei werden Informationen von Verkehrszentralen und von Wetterzentralen über das Internet zu einem Fahrzeug-Backend-Server und von dem Fahrzeug-Backend-Server weiter zu den Navigationssystemen der Fahrzeugflotte übertragen. Die übertragene Verkehrs- und Wetterinformation wird im Fahrzeug verarbeitet. Das Dokument schlägt ebenfalls vor, Fahrzeugsensoren zur fahrzeugbasierten Datengenerierung eines FCD-Systems ("floating car data") zu den und die erfassten Daten an die Wetterzentrale bzw. die Verkehrszentrale zu senden.

Das Dokument EP 2 423 644 A2 beschreibt ein Parkplatzinformationssystem, wobei in einer zentralen Datenbank Information über freie und belegte Parkplätze verwaltet wird. Die Information über freie Parkplätze kann von einem mobilen Navigationssystem abgerufen werden, um es einem Nutzer zu erlauben, einen Parkplatz auszuwählen und sich zu diesem leiten zu lassen. Das mobile Navigationssystem kann auch erfassen, wenn ein Fahrzeug auf einem Parkplatz geparkt wurde, oder diesen wieder verlässt, um die Information zurück an die Datenbank zu senden zur Aktualisierung der in der Datenbank gespeicherten Information.

Das Dokument DE 10 2010 052 289 A1 beschreibt ein Backend, das Information zu Treibstoffpreisen von Tankstellen verwaltet und diese Information an Fahrzeuge zum Abruf bereitstellt. Die Preisinformation wird erfasst, indem Fahrzeuge bei der Annäherung an eine Tankstelle Videodaten aufzeichnen und die Videodaten an das Backend senden, wo diese ausgewertet werden.

Aus dem Dokument DE 102 10 546 A1 ist bekannt, zur automatischen Fahrzeugführung Infrastrukturdaten für einen Abschnitt der Fahrtstrecke in einen fahrzeugeigenen Speicher zu laden. Die Infrastrukturdaten repräsentieren eine virtuelle Infrastruktur, die den Verlauf der Fahrbahn bzw. der Fahrspur in einem globalen Koordinatensystem angibt. Mit Hilfe eines Positionssystems wird die aktuelle Position des Fahrzeugs zu den Infrastrukturdaten in Beziehung gesetzt, um Sollwerte für die verschiedenen Regelkreise des automatischen Fahrzeugführungssystems zu berechnen und der Regelung zugrunde zu legen. Die Infrastrukturdaten werden von einem zentralen Server oder von dezentral von über das Straßennetz verteilten Servern bereitgestellt und über eine Funkverbindung in den Speicher des Fahrzeugs geladen.

Wie diese Beispiele zeigen, wird für jede Anwendung, wie Navigation, Verkehrstelematik, Eigenlokalisierung des Fahrzeugs, sowie autonomes Fahren, jeweils eine eigene, dedizierte Backendeinrichtung vorgesehen, wobei jeweils eine dedizierte Applikation den Fahrzeugen die entsprechend für die Anwendung vorgesehenen Informationen bereitstellt und dabei auf eine dedizierte, eigene Datenbank der dedizierten Backendeinrichtung, und/oder auf Informationen externer Datenbanken zugreift. Auch das Sammeln und Auswerten von Ausgangsdaten, wie beispielsweise durch die Fahrzeuge der FCD-Flotte, erfolgt dabei für jede der Anwendungen getrennt.

Dieser Ansatz der dedizierten Backendeinrichtungen erweist sich in der Praxis als wenig effizient. So findet eine mehrfache Erhebung derselben oder ähnlicher Informationen statt, wie beispielsweise von Trajektoriendaten der Fahrzeuge der FCD-Flotte. Dies führt zu einem erhöhten Kommunikationsaufkommen zur Übertragung der erfassten Daten an die jeweiligen FCD-Zentralen und Backendeinrichtungen, was wiederum zu erhöhten Kosten führen kann. Das erhöhte Kommunikationsaufkommen kann auch dazu führen, dass ein zur Übertragung der FCD-Daten verwendeter Übertragungskanal, wie beispielsweise ein Mobilfunknetz oder ein Abschnitt davon, wie eine Mobilfunkzelle, überlastet wird. Dies kann dazu führen, dass der Übertragungskanal nicht zur Verfügung steht, um andere Information zu übertragen. Die mehrfache Erhebung derselben oder ähnlicher Informationen führt auch dazu, dass in den verschiedenen Backendeinrichtungen dieselben oder ähnliche Informationen mehrfach vorliegen und gespeichert sind, was zu einem entsprechend erhöhten Aufwand an Speicherplatz führt.

Es ist daher eine Aufgabe der vorliegenden Erfindung, eine Backendeinrichtung und ein Verfahren zum Bereitstellen von Informationen für Fahrerassistenzfunktionen eines Fahrzeuges bereitzustellen, das die vorgenannten Nachteile überwindet.

Es ist eine weitere Aufgabe der vorliegenden Erfindung, eine effizientere Backendeinrichtung und ein effizienteres Verfahren zum Bereitstellen von Informationen für Fahrerassistenzfunktionen eines Fahrzeuges bereitzustellen.

Es ist eine nochmals andere Aufgabe der vorliegenden Erfindung, eine Backendeinrichtung und ein Verfahren zum Bereitstellen von Informationen für Fahrerassistenzfunktionen eines Fahrzeuges bereitzustellen, welche eine Verbesserung der Dienstequalität erlauben.

Es ist eine nochmals weitere Aufgabe der vorliegenden Erfindung, eine Backendeinrichtung und ein Verfahren zum Bereitstellen von Informationen für Fahrerassistenzfunktionen eines Fahrzeuges bereitzustellen, welche eine einfache Erweiterung zur Unterstützung neuer Fahrerassistenzfunktionen und/oder eine einfache Einbindung weiterer Informationsquellen erlauben.

Diese und andere Aufgaben der Erfindung werden gelöst durch eine Backendeinrichtung zum Bereitstellen von Informationen für Fahrerassistenzfunktionen von Fahrzeugen gemäß Anspruch 1 und ein Verfahren zum Bereitstellen von Informationen für Fahrerassistenzfunktionen von Fahrzeugen gemäß Anspruch 11. Weitere bevorzugte Ausführungsformen sind in den abhängigen Ansprüchen dargelegt.

Als eine Lösung wird eine Backendeinrichtung zum Bereitstellen von Informationen für Fahrerassistenzfunktionen von Fahrzeugen angegeben, mit einer Mehrzahl von Applikationseinheiten, die jeweils eingerichtet sind, Informationen für zumindest eine Fahrerassistenzfunktion des Fahrzeuges zur Übertragung an die Fahrzeuge bereitzustellen, mit einer Datenbank zur Speicherung von Informationen eines Umfeldmodells, und mit einer Schnittstelleneinheit, welche der Datenbank zugeordnet ist und eingerichtet ist, einen Zugriff auf in der Datenbank gespeicherten Informationen zu ermöglichen, und wobei die Applikationseinheiten jeweils mit der Schnittstelleneinheit verbunden sind, um über die Schnittstelleneinheit in der Datenbank gespeicherte Informationen abzurufen.

In der Backendeinrichtung können die unterschiedlichen Applikationseinheiten über die Schnittstelleneinheit auf eine gemeinsame, einheitliche Datenbasis zugreifen, die in der Datenbank gespeichert ist. Auf Grund der gemeinsamen, einheitlichen Datenbasis erfolgt keine redundante, mehrfache Speicherung gleicher oder ähnlicher Informationen. Gleichzeitig steht die Gesamtheit aller Informationen der gemeinsamen Datenbasis allen Applikationseinheiten gleichzeitig zur Verfügung. Wenn daher in der Datenbank neue Information gespeichert wird, oder auf Grund von neu empfangenen Informationen die gespeicherte Information qualitativ und/oder quantitativ verbessert wird, oder ergänzt wird, dann können alle Applikationseinheiten davon profitieren. Darüber hinaus können den Applikationseinheiten auch weitere Information zur Verfügung stehen und von den Applikationseinheiten genutzt werden, die vorher nicht zur Verfügung standen. Es ist daher möglich, die Information, die von den Applikationseinheiten an die Fahrzeuge zur Verfügung gestellt wird, um in Fahrerassistenzfunktionen verwendet zu werden und/oder diese zu unterstützen, qualitativ und quantitativ zu verbessern. Auf diese Weise können auch die Fahrerassistenzfunktionen eine höhere Dienstequalität erzielen. Die gemeinsame Schnittstelleneinheit und die gemeinsame Datenbank erlauben es auch, die Backendeinrichtung auf einfache Weise um neue Applikationen zur Fahrerassistenz zu erweitern, und/oder neue oder zusätzliche Informationsquellen einzubinden, ohne dass hierzu eine neue Backendarchitektur zur Verfügung gestellt oder Änderungen in den bestehenden Applikationseinheiten vorgenommen werden müssen.

Die Schnittstelleneinheit kann vorzugsweise eine generische Schnittstelleneinheit bilden zum Abrufen von: einer Position und einer Art von Landmarken, einer Position und einer Art von Fahrbahnmarkierungen, wie beispielsweise Haltelinien, einer Position und einer Art von Verkehrszeichen, einer Position, einer Art und einem Status von Lichtsignalanlagen und/oder Wechselverkehrszeichen, und/oder einer Position und einer Art von Verkehrsereignissen, wie beispielsweise eines Stauendes.

Die Mehrzahl von Applikationseinheiten kann insbesondere eine Applikationseinheit zur Verbreitung von Verkehrsinformationen, eine Applikationseinheit zur Verbreitung von Informationen zur Eigenlokalisierung, eine Applikationseinheit zur Verbreitung von Informationen für hochautomatisiertes Fahren, und/oder eine Applikationseinheit zur Verbreitung von Parkplatzinformation umfassen.

Erfindungsgemäß weist die Backendeinrichtung eine Datenempfangseinheit auf, die eingerichtet ist, FCD Daten (Floating Car Data) und/oder XFCD Daten (Extended Floating Car Data), insbesondere Trajektoriendaten, Umfelddaten und/oder Perzeptionsdaten von einer Vielzahl von Fahrzeugen zu empfangen, sowie eine Datenverarbeitungseinheit, die eingerichtet ist, die von der Datenempfangseinheit empfangenen FCD Daten und/oder XFCD Daten zu verarbeiten, Merkmale des Umfeldmodells zu bestimmen, und basierend auf den bestimmten Merkmalen die in der Datenbank gespeicherten Informationen des Umfeldmodells zu aktualisieren und/oder zu ergänzen.

Alternativ oder ergänzend kann die Backendeinrichtung auch eine Schnittstelleneinheit aufweisen, welche eingerichtet ist, sich mit zumindest einer externen Informationsquelle zu verbinden und von der zumindest einen externen Informationsquelle bereitgestellte Informationen abzurufen. Die externe Informationsquelle kann insbesondere ein Server zur Bereitstellung von Verkehrsinformation, ein Server zur Bereitstellung von Parkplatzinformation, und/oder ein Server zur Bereitstellung von Wetterinformation sein. Die Datenverarbeitungseinheit ist dabei bevorzugt weiter eingerichtet, die von der Schnittstelleneinheit empfangenen Informationen zu verarbeiten und basierend darauf Merkmale des Umfeldmodells zu bestimmen.

In der Backendeinrichtung kann daher die Sammlung und Auswertung von Daten und Informationen zentral und unabhängig von den Applikationseinheiten erfolgen. Es ist daher nicht notwendig, für jede Applikationseinheit gesondert Daten und Informationen zu sammeln und auszuwerten.

Vorzugsweise ist die Datenverarbeitungseinheit eingerichtet, aus den empfangenen FCD Daten und/oder XFCD Daten, und/oder aus den empfangenen Informationen der zumindest einen externen Informationsquelle als Merkmale Anzahl der Fahrstreifen, Kurvenradien, Geschwindigkeitsprofile, Verkehrsdichte, Durchschnittliche Fahrzeiten einer Strecke, Zustand der Strecke, Anzahl und Position von Fahrzeugen auf einem Streckenabschnitt, Zustand von Lichtsignalanlagen, Baustellenpositionen, und/oder Belegungen von Parkplätzen zu bestimmen.

Die Datenverarbeitungseinheit ist auch eingerichtet, die auf Basis der empfangenen FCD Daten und/oder XFCD Daten eines Fahrzeuges erfolgte Bestimmung von Merkmalen zu verifizieren durch einen Vergleich mit dem Ergebnis der Bestimmung von Merkmalen auf Basis der empfangenen FCD Daten und/oder XFCD Daten zumindest eines anderen Fahrzeugs und/oder durch einen Vergleich mit in der Datenbank gespeicherten Information, um einen Fehler in Informationen des in der Datenbank gespeicherten Umfeldmodells zu erkennen.

Durch die Vielzahl an Fahrzeugen, welche FCD Daten und/oder XFCD Daten bereitstellen, sowie gegebenenfalls der Berücksichtigung von Informationen, die von den externen Informationsquellen bereitgestellt werden, erhält die Backendeinrichtung eine große Vielfalt an redundanten Informationen, die es erlauben, ein detailliertes und konsistentes Umfeldmodell zu generieren, sowie auf Grund der Redundanz mögliche Fehler zu erkennen.

Erfindungsgemäß ist die Datenempfangseinheit eingerichtet, wenn von der Datenverarbeitungseinheit ein Fehler erkannt wurde, zumindest eines der Fahrzeuge anzuweisen, FCD Daten und/oder XFCD Daten mit einer höheren Erfassungsrate und/oder mit einem größeren Informationsumfang zu erfassen und zu senden.

Auf diese Weise kann ein erkannter Fehler adressiert werden, indem von den Fahrzeugen mehr FCD Daten und/oder XFCD Daten erfasst werden und so die Updaterate erhöht wird, und/oder indem mehr oder zusätzliche Informationen erfasst werden, um auf Basis einer breiteren Informationsbasis die fehlerhafte Information durch korrekte Information zu ersetzen. Es kann so eine hohe Konsistenz des Umfeldmodells aufrecht erhalten werden, was eine hohe Dienstequalität der unterstützten Fahrerassistenzfunktionen ermöglicht.

Alternativ oder ergänzend kann es auch möglich sein, dass ein Fehler im Umfeldmodell von einem Fahrerassistenzsystem eines Fahrzeugs erkannt wird, oder dass ein Fahrer des Fahrzeugs selbst einen Fehler erkennt, beispielsweise weil Informationen, die auf dem Umfeldmodell beruhen, im Widerspruch zu einer tatsächlichen Verkehrssituation stehen, das von Sensoren, die im oder am Fahrzeug angeordnet sind, erfasst oder vom Fahrer beobachtet wird. In diesem Fall kann eine Information über den Fehler an die Datenempfangseinheit gesendet werden, so dass die Datenempfangseinheit auf den derart erkannten Fehler reagieren kann.

Vorzugsweise weist die Backendeinrichtung ferner eine Verkehrszeichenlerneinheit zum Lernen der Position und Art von Verkehrszeichen, und/oder eine Schaltzeitenlerneinheit zum Lernen von Schaltzeiten von Lichtsignalanlagen und/oder Wechselverkehrszeichen, und/oder eine Fahrbahnzustandslerneinheit (22) zum Lernen eines Fahrbahnzustands, insbesondere von Position, Größe und/oder Tiefe von Schlaglöchern auf der Fahrbahn auf.

Die Datenbank kann ferner Informationen enthalten über eine zeitliche und/oder räumliche Auslastung, Verfügbarkeit und/oder zur Verfügung stehende Bandbreite eines Mobilfunknetzes, das zur Verbreitung der Informationen der Applikationseinheiten an die Fahrzeuge verwendet wird, und/oder das zum Empfang der FCD Daten und/oder XFCD Daten verwendet wird.

Die Applikationseinheiten können eingerichtet sein, basierend auf der Information über die Auslastung, Verfügbarkeit und/oder verfügbarer Bandbreite des Mobilfunknetzes, die an die Fahrzeuge zu sendende Informationen im Detaillierungsgrad zu vermindern oder zu erhöhen, und/oder zeitlich früher zu verbreiten.

Alternativ oder ergänzend kann die Datenempfangseinheit eingerichtet sein, basierend auf der Auslastung, Verfügbarkeit und/oder verfügbaren Bandbreite des Mobilfunknetzes, zumindest ein Fahrzeug anzuweisen, einen Umfang oder eine Erfassungsrate der FCD Daten und/oder XFCD Daten zu erhöhen oder zu erniedrigen.

Auf diese Weisen können die Prozesse der Daten- und Informationssammlung im Uplink und der Informationsverbreitung im Downlink optimiert werden unter Berücksichtigung der Gegebenheiten des für die Übertragung verwendeten Mobilfunknetzes. Insbesondere kann bei der Informationsverbreitung im Downlink bei einem ausgelasteten Mobilfunknetz eine digitale Karte oder Informationen zum Ergänzen einer im Fahrzeug vorhandenen digitalen Karte mit geringerem Detaillierungsgrad an die Fahrzeuge gesendet werden, oder es kann eine digitale Karte oder Informationen zum Ergänzen einer im Fahrzeug vorhandenen digitalen Karte zu einem Zeitpunkt an ein Fahrzeug gesendet werden, bevor das Fahrzeug in einen Bereich eintritt, in dem ein Mobilfunkempfang nicht oder nur begrenzt besteht. Auf ähnliche Weise können auch andere Informationen, die von den Applikationseinheiten an die Fahrzeuge bereitgestellt werden, im Umfang beispielsweise auf ein notwendiges Minimum reduziert werden, wenn das Mobilfunknetz ausgelastet ist.

Als eine weitere Lösung wird ein Verfahren angegeben zum Bereitstellen von Informationen für Fahrerassistenzfunktionen von Fahrzeugen, mit den Schritten:
Bereitstellen von Informationen eines Umfeldmodells in einer Datenbank, Abrufen, durch eine Mehrzahl von Applikationseinheiten, von in der Datenbank gespeicherten Informationen durch Zugreifen auf eine der Datenbank zugeordnete Schnittstelle, und Bereitstellen, durch die Mehrzahl von Applikationseinheiten, von Informationen für zumindest eine Fahrerassistenzfunktion der Fahrzeuge durch die Mehrzahl von Applikationseinheiten zur Übertragung an die Fahrzeuge.

Bevorzugt weist das Verfahren weiter die Schritte auf: Empfangen von FCD Daten und/oder XFCD Daten, insbesondere Trajektoriendaten, Umfelddaten und/oder Perzeptionsdaten, von einer Vielzahl von Fahrzeugen, und/oder Abrufen von Informationen von zumindest einer externen Informationsquelle, Bestimmen, basierend auf den empfangenen FCD Daten und/oder XFCD Daten und/oder den von der zumindest einen externen Informationsquelle abgerufenen Informationen, von Merkmalen des Umfeldmodells, und Aktualisieren und/oder Ergänzen der in der Datenbank gespeicherten Informationen des Umfeldmodells basierend auf den bestimmten Merkmalen.

Das Verfahren kann bevorzugt weiter die Schritte aufweisen: Verifizieren der Bestimmung von Merkmalen, die auf Basis der empfangenen FCD Daten und/oder XFCD Daten eines Fahrzeuges erfolgt ist, durch einen Vergleich mit dem Ergebnis der Bestimmung von Merkmalen auf Basis der empfangenen FCD Daten und/oder XFCD Daten zumindest eines anderen Fahrzeugs und/oder durch einen Vergleich mit in der Datenbank gespeicherten Information, um einen Fehler in Informationen des in der Datenbank gespeicherten Umfeldmodells zu erkennen, wobei wenn ein Fehler erkannt wird, zumindest eines der Fahrzeuge angewiesen wird, FCD Daten und/oder XFCD Daten mit einer höheren Erfassungsrate und/oder mit einem größeren Informationsumfang zu erfassen und zu senden.

Vorzugsweise umfasst die Datenbank ferner Informationen über eine zeitliche und/oder räumliche Auslastung, Verfügbarkeit und/oder zur Verfügung stehende Bandbreite eines Mobilfunknetzes enthält, das zur Verbreitung der Informationen zumindest einer Fahrerassistenzfunktionen der Fahrzeuge verwendet wird, und wobei die Applikationseinheiten, basierend auf der Information über die Auslastung, Verfügbarkeit und/oder verfügbarer Bandbreite, die an die Fahrzeuge zu sendende Informationen im Detaillierungsgrad vermindern oder erhöhen, und/oder zeitlich früher verbreiten.

Die Datenbank kann ferner Informationen umfassen über eine zeitliche und/oder räumliche Auslastung, Verfügbarkeit und/oder zur Verfügung stehende Bandbreite eines Mobilfunknetzes enthält, das zum Empfang der FCD Daten und/oder XFCD Daten verwendet wird, und wobei zumindest ein Fahrzeug angewiesen wird, einen Umfang oder eine Erfassungsrate der FCD Daten und/oder XFCD Daten zu erhöhen oder zu erniedrigen basierend auf der Auslastung, Verfügbarkeit und/oder verfügbaren Bandbreite des Mobilfunknetzes. Die Erfindung wird im Folgenden an Hand eines Ausführungsbeispiels beschrieben werden, mit Bezug auf die Zeichnung:

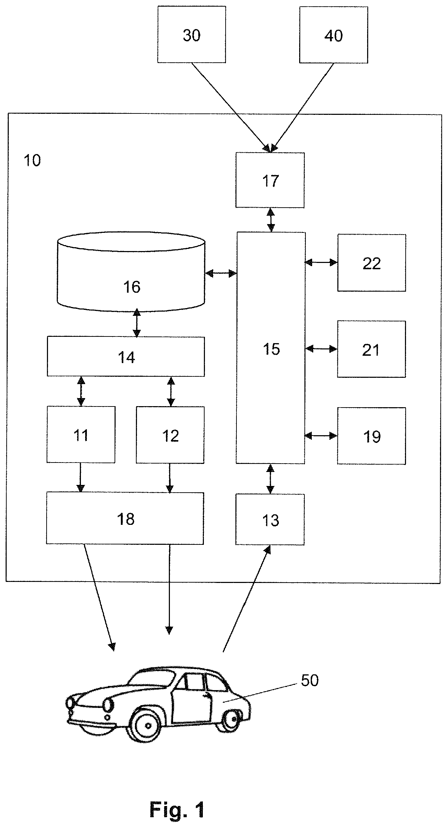

Fig. 1 zeigt eine Backendeinrichtung gemäß einer Ausführungsform.

In der Figur 1 ist eine beispielhafte Backendeinrichtung 10 gemäß einer Ausführungsform der Erfindung dargestellt.

Wie in der Figur 1 gezeigt, weist die Backendeinrichtung 10 eine Mehrzahl von Applikationseinheiten 11, 12 auf, die jeweils eingerichtet sind, an eine große Anzahl von Fahrzeugen 50 jeweils Informationen zur Verwendung in Fahrerassistenzfunktionen der Fahrzeuge 50 bereitzustellen.

So kann es sich bei der Applikationseinheit 11 beispielsweise um eine Applikationseinheit handeln, welche eingerichtet ist, Verkehrsinformation zu verbreiten, wie beispielsweise Informationen über Geschwindigkeitsbegrenzungen, Höhenprofil, Zustand der Strecke, Anzahl der Fahrstreifen, durchschnittliche Fahrzeiten einer Strecke, Staumeldungen und so weiter. Die Verbreitung der Verkehrsinformation kann beispielsweise über einen Traffic Message Channel, TMC, eines Rundfunksignals verbreitet werden, und/oder über eine Infrastructure2Car, I2C, Kommunikation, beispielsweise über das Mobilfunknetz, direkt an die Fahrzeuge 50 gesendet werden. Diese Informationen können von den Fahrerassistenzsystemen des Fahrzeugs 50 beispielsweise dazu genutzt werden, den Fahrer zeitoptimiert zu navigieren und/oder Hinweise zum verbrauchsoptimierten Fahren zu geben.

Bei der Applikationseinheit 12 kann es sich beispielsweise um eine Applikationseinheit handeln, welche eingerichtet ist, Informationen für hochautomatisiertes Fahren zu verbreiten und an die Fahrzeuge 50 bereitzustellen, wie beispielsweise Informationen einer hochgenauen, digitalen Landkarte. Vorzugsweise wird die digitale Landkarte gebildet durch oder umfasst ein hochgenaues Straßenmodell, das Informationen enthält über Anzahl und Verlauf von Fahrstreifen, Art und Position von Linienmarkierungen, das Vorhandensein von Randbebauungen, sowie deren Klasse und relative oder absolute Position, Positionen von Kreuzungen, Positionen und Zustände von Lichtsignalanlagen und/oder Wechselverkehrszeichen, Geschwindigkeitsbegrenzungen, Überholverbote und andere geltende Verkehrsregeln, oder auch Informationen über dynamische Objekte im Fahrzeugumfeld, wie beispielsweise Positionen anderer Fahrzeuge, oder Positionen anderer mobiler Endgeräte, welche beispielsweise von Radfahrern mitgeführt werden, oder auch Informationen über Gefahrenstellen. Die Verbreitung der Informationen für hochautomatisiertes Fahren erfolgt bevorzugt über eine I2C Kommunikation direkt an die Fahrzeuge 50.

Die genannten Beispiele sind nicht beschränkend, und es können stattdessen oder zusätzlich in der Backendeinrichtung auch andere Applikationseinheiten vorgesehen werden, wie beispielsweise eine Applikationseinheit zum Verbreiten von Informationen zur Eigenlokalisierung, wie Kartendaten einer digitalen Landkarte, Information über die Verfügbarkeit von Daten eines Globalen Navigationssystems (GNSS), GNSS Korrekturdaten, oder auch die Anzahl und Position von Fahrzeugen auf einem Streckenabschnitt zum Zweck, eine genauere Positionsbestimmung mittels kooperativer GNSS Methoden vorzunehmen. Die Verbreitung der Informationen zur Eigenlokalisierung erfolgt bevorzugt ebenfalls über eine I2C Kommunikation direkt an die Fahrzeuge 50.

Wie in der Figur 1 gezeigt, greifen die Applikationseinheiten 11, 12 über eine gemeinsame, einheitliche Schnittstelleneinheit 14 auf eine Datenbank 16 zu. Die Datenbank 16 stellt eine gemeinsame Datenbasis dar, in der Daten und Informationen, die für die einzelnen Applikationseinheiten 11, 12 relevant sind oder sein können, gespeichert sind.

Die Datenbank 16 speichert Informationen in Form eines Umfeldmodells, insbesondere mit Informationen einer hochauflösenden, hochgenauen digitalen Karte. Bevorzugt wird die digitale Landkarte gebildet durch oder umfasst ein hochgenaues Straßenmodell, welches den Verlauf von Strecken und Fahrspuren beschreibt, und Informationen über Anzahl und Verlauf von Fahrstreifen, Kurvenradien, Steigungen, Kreuzungen und ähnliche Charakteristiken enthält. Das Umfeldmodell kann weiter Informationen über statische Objekte umfassen, wie beispielsweise Informationen über Position und Art von Fahrbahn- und Linienmarkierungen, etwa Haltelinien, Zebrastreifen, Mittelstreifen, Fahrbahnrandmarkierungen und ähnliches, das Vorhandensein von Randbebauungen, sowie deren Klasse und relative oder absolute Position, Informationen über Position und Art von Verkehrszeichen, oder Informationen über Position, Art und Zustand von Lichtsignalanlagen oder Wechselverkehrszeichen. Ebenfalls können Position und Art von Landmarken gespeichert sein, auf welche sich ein Fahrzeug 50 zur Eigenlokalisierung beziehen kann. Das Umfeldmodell kann weiter auch Informationen über dynamische Objekte umfassen, wie beispielsweise Positionen und Geschwindigkeiten von Fahrzeugen 50 oder anderen Verkehrsteilnehmern, wie beispielsweise Radfahrern oder Fußgängern, welche an Hand von mitgeführten mobilen Endgeräten erkannt und verfolgt werden können, oder Informationen über die Position eines Stauendes oder einer Baustelle.

Durch die Möglichkeit, in dem Umfeldmodell im wesentlichen beliebige Information als statische oder dynamische Objekte zu speichern, besteht auch die Möglichkeit, das Umfeldmodell auf einfache Weise um zusätzliche und/oder neuartige Informationen zu ergänzen und zu erweitern.

So kann beispielsweise vorgesehen werden, in dem Umfeldmodell auch Informationen über die Position und Größe und/oder Tiefe von Schlaglöchern zu speichern. Diese Informationen können beispielsweise von einer Fahrkomfort-Applikationseinheit (nicht dargestellt) in der Backendeinrichtung 10 an die Fahrzeuge 50 verbreitet werden, um in den Fahrzeugen 50 von Fahrkomfortassistenzsystemen verwertet zu werden, um beispielsweise eine Fahrwerksdämpfung vorbeugend vor einem Schlagloch entsprechend einzustellen und so den Fahrkomfort für den Fahrer zu verbessern.

Die gleiche Information über die Position und Größe und/oder Tiefe von Schlaglöchern kann auch von anderen bekannten oder neuartigen Applikationseinheiten nutzbringend verwendet werden. So kann beispielsweise die Applikationseinheit 12 für hochautomatisiertes Fahren auf diese Information zugreifen und entsprechende Informationen an die Fahrzeuge 50 verbreiten, damit ein im Fahrzeug 50 angeordnetes Fahrerassistenzsystem zum hochautomatisierten Fahren diese Informationen nutzen kann. Dies kann vorteilhaft der Fall sein, wenn das Fahrerassistenzsystem zum hochautomatisierten Fahren unter anderem auf Sensordaten zurückgreift, die von einem am oder im Fahrzeug 50 angeordneten Kamerasystem erfasst werden, um etwaige Bildverschiebungen, die von einem Nicken des Fahrzeugs auf Grund des Schlaglochs hervorgerufen werden, zu kompensieren. Bevorzugt kann dazu in dem Umfeldmodell die Information über die Position und Größe und/oder Tiefe von Schlaglöchern zusätzlich auch Informationen beinhalten, welche die Auswirkung des Schlaglochs auf eine Kameraerfassung beschreiben können. Auf diese Weise kann die Qualität der Sensorerfassung verbessert werden, was wiederum eine Verbesserung der Qualität des hochautonomen Fahrens ermöglichen kann.

Die Applikationseinheiten 11, 12 können eingerichtet sein, über die Schnittstelleneinheit 14 alle in der Datenbank 16 gespeicherten Daten und Informationen abzurufen, um die für die jeweiligen Applikationseinheiten 11, 12 relevanten Daten und Informationen zu extrahieren oder zu generieren. Bevorzugt werden von den Applikationseinheiten 11, 12 über die Schnittstelleneinheit 14 nur die Daten und Informationen aus der Datenbank 16 abgerufen, die für die jeweilige Applikationseinheit 11, 12 relevant sind.

Die Verbreitung der Informationen von den Applikationseinheiten 11, 12 an die Fahrzeuge 50 kann für jede Applikationseinheit 11, 12 getrennt und gesondert erfolgen. Bevorzugt kann jedoch in der Backendeinrichtung 10 eine Aggregationseinheit 18 vorgesehen sein, welche die von den Applikationseinheiten 11, 12 für jeweils ein Fahrzeug 50 bestimmte Informationen empfängt und aggregiert. Dies kann es der Aggregationseinheit 18 erlauben, redundante Informationen, die von mehreren der Applikationseinheiten 11, 12 zur Verbreitung an das Fahrzeug 50 vorgesehen sind, zu eliminieren und so die Verbreitung von Informationen an die Fahrzeuge 50 zu optimieren.

Die Fahrzeuge 50 können auf diese Weise von der Backeneinrichtung 10 Informationen erhalten, welche von verschiedenen Fahrerassistenzsystemen, die in den Fahrzeugen 50 ausgestattet sind, verwendet werden können, um Fahrerassistenzfunktionen auszuführen.

Bei zumindest einigen der Vielzahl an Fahrzeugen 50 kann es sich auch um Fahrzeuge 50 einer Flotte von im Verkehr mitschwimmende, als Probe Vehicle bzw. Messfahrzeuge dienende Fahrzeuge 50 bzw. Fahrzeuge einer Floating Car Data, FCD, Flotte handeln. Diese Fahrzeuge können jeweils Positions- und Geschwindigkeitsdaten erfassen und als Floating Car Data, FCD Daten, an eine Datenempfangseinheit 13 der Backendeinrichtung senden. Bevorzugt können die Fahrzeuge der FCD Flotte weitere Informationen, die im Fahrzeug oder im Fahrerassistenzsystem erfasst und bekannt sind, wie insbesondere Trajektoriendaten, oder Information über von einem Kamerasystem des Fahrzeugs 50 erfasste Fahrspurmarkierungen, als erweiterte FCD Daten, XFCD Daten, an die Datenempfangseinheit 13 senden.

Die Datenempfangseinheit 13 kann die von einer Vielzahl von Fahrzeugen einer FCD Flotte gesendeten FCD und/oder XFCD Daten empfangen und einer Vorverarbeitung unterwerfen, die insbesondere ein Anonymisieren der empfangenen FCD und/oder XFCD Daten beinhalten kann.

Die Datenempfangseinheit 13 ist weiter mit einer Datenverarbeitungseinheit 15 verbunden, welche die von den Fahrzeugen 50 erfassten XFCD Daten weiter verarbeitet, indem beispielsweise die Trajektoriendaten ausgewertet werden, um charakteristische Merkmale zu extrahieren, wie etwa einen Verlauf einer Straße oder einer Fahrspur, Kurvenradien, Verkehrsdichte, oder Geschwindigkeitsprofile.

In der Backendeinrichtung kann weiter eine Schnittstelleneinheit 17 vorgesehen sein, die eingerichtet ist, sich mit externen Datenquellen, wie beispielsweise einem Verkehrsinformationsserver 30 oder einem Parkplatzinformationsserver 40 zu verbinden, um Informationen wie in diesem Beispiel Verkehrsinformation oder Parkplatzinformation abzurufen. Diese Information kann von der Schnittstelleneinheit 17 an die Datenverarbeitungseinheit 15 ausgegeben werden, um von der Datenverarbeitungseinheit 15 ebenfalls verarbeitet zu werden

Die von der Datenverarbeitungseinheit 15 als Ergebnis der Verarbeitung ermittelten Informationen werden von der Datenverarbeitungseinheit 15 in die Datenbank 16 eingespeichert.

Alternativ und bevorzugt kann auch vorgesehen sein, dass zusätzlich zur Datenverarbeitungseinheit 15 Lerneinheiten vorgesehen sind, welche beispielsweise von der Datenverarbeitungseinheit 15 alle oder zumindest einen Teil der FCD Daten und/oder XFCD Daten der Fahrzeuge 50 erhalten können, um daraus Informationen abzuleiten und zu lernen. Die abgeleiteten oder gelernten Informationen können dazu verwendet werden, um in dem Umfeldmodell der Datenbank 16 gespeicherte Informationen zu aktualisieren, zu verifizieren oder zu falsifizieren, und/oder um das in der Datenbank 16 gespeicherte Umfeldmodell mit den abgeleiteten oder gelernten Informationen zu ergänzen.

So kann beispielsweise eine Verkehrszeichenlerneinheit 19 vorgesehen sein, welche eingerichtet ist, basierend auf FCD Daten und/oder XFCD Daten, die von den Fahrzeugen 50 bereitgestellt werden, die Position und Art von Verkehrszeichen zu lernen. So kann beispielsweise vorgesehen sein, dass zumindest einige der Fahrzeuge 50 mit einer am oder im Fahrzeug 50 angeordneten Kamera Bilder von Verkehrszeichen erfassen und an die Backendeinrichtung 10 senden. Die Verkehrszeichenlerneinheit 19 kann die Bilder auswerten, um in den Bildern enthaltene Verkehrszeichen zu erkennen. Basierend auf den ebenfalls übermittelten Trajektoriendaten, sowie gegebenenfalls weiteren Perzeptionsdaten, lassen sich den Bildern entsprechende Positionen zuordnen, so dass den aus den Bildern erkannten Verkehrszeichen ebenfalls eine Position zugeordnet werden kann. Wird auf diese Weise ein Verkehrszeichen erkannt und gelernt, kann ein Abgleich mit dem in der Datenbank 16 Umfeldmodell erfolgen, um die Informationen über Verkehrszeichen des in dem in der Datenbank 16 gespeicherten Umfeldmodells zu verifizieren bzw. zu ergänzen.

Weiter kann bevorzugt eine Schaltzeitenlerneinheit 21 vorgesehen sein zum Lernen von Schaltzeiten von Lichtsignalanlagen und/oder Wechselverkehrszeichen.

Die Information, wann eine Ampel beispielsweise auf grün oder rot schaltet kann insbesondere dazu verwendet werden, um dem Fahrer des Fahrzeugs 50 bei einer vorausschauenden Fahrweise zu assistieren, so dass unnötige Beschleunigungen oder Verzögerungen des Fahrzeugs 50 vermieden werden können und das Fahrzeug 50 möglichst verbrauchsarm bewegt werden kann. Es kann dabei vorgesehen sein, dass die Informationen über Schaltzeiten von Ampeln, anderen Lichtsignalanlagen, und/oder von Wechselverkehrszeichen von einem externen Server, der beispielsweise von einem Diensteanbieter für Telematikdaten betrieben wird, über die Schnittstelleneinheit 17 bezogen werden, um in dem Umfeldmodell in der Datenbank 16 gespeichert zu werden. Hierbei kann sich das Problem stellen, dass unterschiedliche Bereiche und/oder unterschiedliche Informationsklassen der vom Provider bereitgestellten Schaltzeitinformationen zu unterschiedlichen Zeiten erfasst sein können. Dies kann insbesondere darauf beruhen, dass die Schaltzeiten von festzeitgesteuerten Lichtsignalanlagen und Wechselverkehrszeiten üblicher Weise von der Verkehrsbehörde des jeweiligen Landes oder der jeweiligen Stadt oder Gemeinde festgelegt werden, wobei es häufiger zu Änderungen kommen kann und wobei es zu jeweils unterschiedlich langen Zeitverzögerungen kommen kann, bis eine Änderung der Informationen über die Zeitsteuerung ihren Weg über den Diensteanbieter die Backendeinrichtung 10 erreicht.

Die Schaltzeitenlerneinheit 21 kann daher dazu vorgesehen sein, die Schaltzeitinformation für die Lichtsignalanlagen und/oder Wechselverkehrszeichen zu überprüfen und "abzusichern", sowie gegebenenfalls veraltete Informationen zu aktualisieren und zu berichtigen.

Zu diesem Zweck kann vorgesehen sein, dass auch die Schaltzeitenlerneinheit 21 Bilder auswertet, die mit einer am oder im Fahrzeug 50 ausgestatteten Kamera erfasst werden, wobei aus den zugeordneten Trajektoriendaten sich die Position der Lichtsignalanlage oder des Wechselverkehrszeichens ableiten lässt, sowie der Zeitpunkt, zu dem die Bilder aufgezeichnet wurden. Durch eine Auswertung der Bilder kann erfasst werden, in welchem tatsächlichen Zustand sich die Lichtsignalanlage oder das Wechselverkehrszeichen befindet, zum Beispiel, indem ein Bild danach ausgewertet wird, ob es eine grüne oder eine rote Ampel zeigt.

Alternativ oder ergänzend kann es auch vorgesehen sein, dass die Schaltzeitenlerneinheit 21 einen tatsächlichen Zustand einer Lichtsignalanlage oder eines Wechselverkehrszeichens auch allein basierend auf den Trajektoriendaten eines Fahrzeugs 50 erkennt. Aus dem in der Datenbank 16 gespeicherten Umfeldmodell ist bekannt, wo sich eine Lichtsignalanlage oder ein Wechselverkehrszeichen befindet. Wenn die Schaltzeitenlerneinheit 21 anhand der Trajektoriendaten eines Fahrzeugs 50 zum Beispiel feststellt, dass das Fahrzeug 50 eine Ampel ohne Anzuhalten passiert hat, dann kann die Schaltzeitenlerneinheit 21 annehmen, dass die Ampel tatsächlich auf grün stand. Auf ähnliche Weise kann zum Beispiel bei einem Wechselverkehrszeichen, das nur zeitweise ein Abbiegen erlaubt, der tatsächliche Zustand des Wechselverkehrszeichens aus einem erfolgten Abbiegevorgang geschlossen werden.

Die so bestimmte Information über einen tatsächlichen Zustand einer Lichtsignalanlage oder einem Wechselverkehrszeichen zu einer bestimmten Zeit kann anschließend verglichen werden mit dem Zustand für die Lichtsignalanlage oder das Wechselverkehrszeichen, der sich basierend auf der in dem Umfeldmodell in der Datenbank 16 gespeicherten Schaltzeiteninformation ergeben soll, um die in dem Umfeldmodell in der Datenbank 16 gespeicherte Schaltzeitinformation zu verifizieren und zu bestätigen oder als fehlerhaft bzw. veraltet zu erkennen und gegebenenfalls zu aktualisieren.

Es kann ebenfalls eine Fahrbahnzustandslerneinheit 22 zum Lernen eines Fahrbahnzustands vorgesehen sein, insbesondere zum Lernen von Position, Größe und/oder Tiefe von Schlaglöchern auf der Fahrbahn. Die Fahrbahnzustandslerneinheit 22 kann dabei beispielsweise ebenfalls auf Bilddaten einer am oder im Fahrzeug 50 ausgestatteten Kamera zurückgreifen, um aus Bildern der Fahrbahnoberfläche Informationen über den Zustand der Fahrbahn abzuleiten. Insbesondere können aus den Bildern der Fahrbahn das Vorhandensein von Schlaglöchern erkannt werden. Durch die Zuordnung der Bilddaten zu den Trajektoriendaten des Fahrzeugs lassen sich die Positionen der Schlaglöcher bestimmen. Eine Auswertung der Bilddaten kann auch ein Vermessen der Größe des Schlagloches erlauben. Wenn die Trajektoriendaten des Fahrzeugs 50 anzeigen, dass sich das Fahrzeug 50 durch das Schlagloch bewegt hat, dann kann vorzugsweise weiter vorgesehen sein, aus den zeitlich nachfolgenden Bildern zu ermitteln, welchen Einfluss die Fahrt durch das Schlagloch auf die Kameraerfassung hat, beispielsweise wie stark die optische Achse der Kamera auf Grund der durch das Schlagloch hervorgerufenen Nickbewegung des Fahrzeugs abgelenkt wird. Diese Information mag ebenfalls dem betreffenden Schlagloch zugeordnet in der Datenbank 16 gespeichert werden.

Es werden daher von der Datenverarbeitungseinheit 15 eine Vielfalt von redundanten Informationen verarbeitet, die von der Datenverarbeitungseinheit 15 oder der Schnittstelleneinheit 17 empfangen werden. Diese große Redundanz erlaubt es, ein Umfeldmodell mit hohem Detaillierungsgrad, hoher Informationsgüte und großer Konsistenz zu generieren und in der Datenbank 16 bereit zu stellen.

Auf Grund der Redundanz ist es ebenfalls möglich, Fehler zu erkennen. So kann beispielsweise die Datenverarbeitungseinheit 15 die von den Fahrzeugen 50 empfangenen Trajektoriendaten wechselweise vergleichen, und/oder die Trajektoriendaten mit in der Datenbank 16 gespeicherten Informationen vergleichen, um einen Fehler zu erkennen.

Wird ein Fehler erkannt, so können beispielsweise die fehlerhafte Information, wie beispielsweise von einem Fahrzeug 50 übertragene, fehlerhafte Trajektorieninformationen verworfen werden, oder eine in der Datenbank 16 gespeicherte, fehlerhafte Information, wie beispielsweise über eine nicht mehr bestehende Baustelle oder Straßensperrung, gelöscht werden.

Wenn ein Fehler erkannt wird, dann ist es in Reaktion darauf auch möglich, weitere oder andere Maßnahmen zu veranlassen, um den Fehler zu adressieren. So weist die Datenempfangseinheit 13 Fahrzeuge 50, die sich in dem räumlichen Gebiet bewegen, für das der Fehler erkannt wurde, an, XFCD Daten mit höherer Frequenz und/oder mit einer größeren Anzahl zusätzlich erfasster Fahrzeug- und Umfelddaten zu erfassen und zu übermitteln. Der als fehlerhaft identifizierte Bereich der Umfelddateninformation in der Datenbank 16 kann daher rasch aktualisiert und berichtigt werden.

Es kann auch vorgesehen sein, dass ein Fahrerassistenzsystem in einem Fahrzeug 50 einen Fehler in einer Information erkennt, die von einer der Applikationseinheiten 11, 12 an das Fahrzeug 50 gesendet wurde, beispielsweise an Hand eines Vergleichs mit Informationen, die von den Umfeldsensoren des Fahrzeugs 50 erfassten wurden. Wird auf diese Weise ein Fehler erkannt, dann kann vorgesehen sein, dass das Fahrzeug 50 eine entsprechende Nachricht über den Fehler an die Datenempfangseinheit 13 senden kann, bevorzugt mit einer Information über die Position, an welcher der Fehler erkannt wurde. Es ist ebenfalls möglich, dass der Fahrer des Fahrzeugs 50 den Fehler erkennen kann und das Senden einer entsprechenden Nachricht veranlassen kann.

Auf diese Weise kann die Güte der in der Datenbank 16 bereitgestellten Informationen weiter verbessert werden, was wiederum den Applikationseinheiten 11, 12 erlaubt, Informationen besserer Güte an die Fahrzeuge 50 bereitzustellen. Im Ergebnis kann daher die Dienstgüte der Fahrerassistenzfunktionen im Fahrzeug 50 verbessert werden.

Die Backendeinrichtung 10 kann beispielsweise auf einem einzelnen Server verwirklicht sein, oder es können einzelne oder alle Komponenten der Backendeinrichtung 10 auf einem eigenen Server implementiert sein, oder jeweils auf einem Servercluster implementiert sein.

Die vorstehende Beschreibung bevorzugter Ausführungsformen der Erfindung ist allein beispielhaft und nicht beschränkend für die vorliegende Erfindung.

So kann vorgesehen sein, dass einzelne oder alle der vorstehend beschriebenen Lerneinheiten 19, 21 oder 22 in die Datenverarbeitungseinheit 15 integriert werden. Ebenfalls ist denkbar, dass einzelne oder alle der Applikationseinheiten 11, 12 eine eigene Auswertung von FCD Daten oder XFCD Daten der Fahrzeuge 50 vornehmen, beispielsweise um selbst einzelne Merkmale des Umfeldmodells, die für die entsprechende Applikation relevant sein mögen, zu lernen und die Ergebnisse über die Schnittstelleneinheit 14 in die Datenbank 16 einzuspeichern. In diesem Fall können einzelne oder alle der Lerneinheiten 19, 21 oder 22 in einzelne oder mehrere der Applikationseinheiten 11, 12 integriert sein.

### Bezugszeichen:

- 10: Backendeinrichtung
- 11, 12: Applikationseinheiten
- 13: Datenempfangseinheit
- 14: Schnittstelleneinheit
- 15: Datenverarbeitungseinrichtung
- 16: Datenbank
- 17: Schnittstelleneinheit
- 18: Aggregationseinheit
- 19, 21, 22: Lerneinheiten
- 30: Verkehrsinformationsserver
- 40: Parkplatzinformationsserver
- 50: Fahrzeug

## Patentansprüche

1. Backendeinrichtung (10) zum Bereitstellen von Informationen für Fahrerassistenzfunktionen von Fahrzeugen (50), aufweisend:
eine Mehrzahl von Applikationseinheiten (11, 12), die jeweils eingerichtet sind, Informationen für zumindest eine Fahrerassistenzfunktion des Fahrzeuges (50) zur Übertragung an die Fahrzeuge (50) bereitzustellen; und
eine Datenbank (16) zur Speicherung von Informationen eines Umfeldmodells; und
eine Schnittstelleneinheit (14), welche der Datenbank (16) zugeordnet ist und eingerichtet ist, einen Zugriff auf in der Datenbank (16) gespeicherte Informationen zu ermöglichen,
wobei die Applikationseinheiten (11, 12) jeweils mit der Schnittstelleneinheit (14) verbunden sind, um über die Schnittstelleneinheit (14) in der Datenbank (16) gespeicherte Informationen abzurufen;
eine Datenempfangseinheit (13), die eingerichtet ist, FCD Daten insbesondere Trajektoriendaten und/oder Umfelddaten, von einer Vielzahl von Fahrzeugen (50), zu empfangen; und
eine Datenverarbeitungseinheit (15), die eingerichtet ist, die von der Datenempfangseinheit (13) empfangenen FCD Daten zu verarbeiten, Merkmale des Umfeldmodells zu bestimmen, und basierend auf den bestimmten Merkmalen die in der Datenbank (16) gespeicherten Informationen des Umfeldmodells zu aktualisieren ;
wobei die Datenverarbeitungseinheit (15) eingerichtet ist, eine auf Basis von empfangenen FCD Daten eines Fahrzeuges (50) erfolgte Bestimmung von Merkmalen zu verifizieren durch einen Vergleich mit dem Ergebnis der Bestimmung von Merkmalen auf Basis der empfangenen FCD Daten zumindest eines anderen Fahrzeugs (50), um einen Fehler in Informationen des in der Datenbank (16) gespeicherten Umfeldmodells zu erkennen;
**dadurch gekennzeichnet, dass**
die Datenempfangseinheit (13) eingerichtet ist, wenn von der Datenverarbeitungseinheit (15) ein Fehler erkannt wurde, zumindest eines der Fahrzeuge (50) anzuweisen, FCD Daten mit einer höheren Erfassungsrate oder mit einem größeren Informationsumfang zu erfassen und zu senden.

2. Backendeinrichtung (10) nach einem der vorstehenden Ansprüche, wobei die Schnittstelleneinheit (14) eine generische Schnittstelleneinheit bildet zum Abrufen von:
einer Position und einer Art von Landmarken,
einer Position und einer Art von Fahrbahnmarkierungen,
einer Position und einer Art von Verkehrszeichen,
einer Position, einer Art und einem Status von Lichtsignalanlagen und/oder Wechselverkehrszeichen, und/oder
einer Position und einer Art von Verkehrsereignissen.

3. Backendeinrichtung (10) nach einem der vorstehenden Ansprüche, wobei die Mehrzahl von Applikationseinheiten (11, 12) eine Applikationseinheit zur Verbreitung von Verkehrsinformationen, eine Applikationseinheit zur Verbreitung von Informationen zur Eigenlokalisierung, und/oder eine Applikationseinheit zur Verbreitung von Parkplatzinformation umfasst.

4. Backendeinrichtung (10) nach Anspruch 1, wobei die Backendeinrichtung (10) ferner eine Schnittstelleneinheit (17) aufweist, welche eingerichtet ist, sich mit zumindest einer externen Informationsquelle, insbesondere einem Server (30) zur Bereitstellung von Verkehrsinformation, einem Server (40) zur Bereitstellung von Parkplatzinformation, und/oder einem Server zur Bereitstellung von Wetterinformation, zu verbinden und von dem zumindest einen Server bereitgestellte Informationen abzurufen, und wobei
die Datenverarbeitungseinheit (15) weiter eingerichtet ist, die von der Schnittstelleneinheit (17) empfangenen Informationen zu verarbeiten und basierend darauf Merkmale des Umfeldmodells zu bestimmen.

5. Backendeinrichtung (10) nach Anspruch 1 oder 4, wobei die Datenverarbeitungseinheit (15) eingerichtet ist, aus den empfangenen FCD Daten, und/oder aus den empfangenen Informationen der zumindest einen externen Informationsquelle mindestens eines der folgenden Merkmale zu bestimmen:
Fahrspuranzahlen, Kurvenradien,
Geschwindigkeitsprofile,
Belegung eines Parkplatzes.

6. Backendeinrichtung (10) nach einem der Ansprüche 1, 4 und 5, ferner aufweisend:
eine Verkehrszeichenlerneinheit (19) zum Lernen der Position und Art von Verkehrszeichen; und/oder
eine Schaltzeitenlerneinheit (21) zum Lernen von Schaltzeiten von Lichtsignalanlagen und/oder Wechselverkehrszeichen; und/oder
eine Fahrbahnzustandslerneinheit (22) zum Lernen eines Fahrbahnzustands, insbesondere von Position, Größe und/oder Tiefe von Schlaglöchern auf der Fahrbahn.

7. Backendeinrichtung (10) nach einem der vorstehenden Ansprüche, wobei die Datenbank (16) ferner Informationen über eine zeitliche und/oder räumliche Auslastung, Verfügbarkeit oder zur Verfügung stehende Bandbreite eines Mobilfunknetzes enthält, das zur Verbreitung der Informationen der Applikationseinheiten (11, 12) an die Fahrzeuge (50) verwendet wird, und wobei die Applikationseinheiten (11, 12) eingerichtet sind, basierend auf der Information über die Auslastung, Verfügbarkeit oder verfügbarer Bandbreite, die an die Fahrzeuge (50) zu sendende Informationen im Detaillierungsgrad zu vermindern oder zu erhöhen, oder zeitlich früher zu verbreiten.

8. Backendeinrichtung (10) nach einem der Ansprüche 1, 4, 5 und 6, wobei die Datenbank (16) ferner Informationen über eine zeitliche und/oder räumliche Auslastung, Verfügbarkeit und/oder zur Verfügung stehende Bandbreite eines Mobilfunknetzes enthält, das zum Empfang der FCD Daten verwendet wird, und wobei die Datenempfangseinheit (13) eingerichtet ist, zumindest ein Fahrzeug (50) anzuweisen, einen Umfang oder eine Erfassungsrate der FCD Daten zu erhöhen oder zu erniedrigen basierend auf der Auslastung, Verfügbarkeit und/oder verfügbaren Bandbreite.

9. Verfahren zum Bereitstellen von Informationen für Fahrerassistenzfunktionen von Fahrzeugen (50), mit den Schritten:
Bereitstellen von Informationen eines Umfeldmodells in einer Datenbank (16);
Abrufen, durch eine Mehrzahl von Applikationseinheiten (11, 12), von in der Datenbank (16) gespeicherten Informationen durch Zugreifen auf eine der Datenbank (16) zugeordnete Schnittstelleneinheit (14); und
Bereitstellen, durch die Mehrzahl von Applikationseinheiten (11, 12), von Informationen für zumindest eine Fahrerassistenzfunktion der Fahrzeuge (50) durch die Mehrzahl von Applikationseinheiten (11, 12) zur Übertragung an die Fahrzeuge (50);
Empfangen von FCD Daten, insbesondere Trajektoriendaten und/oder Umfelddaten, von einer Vielzahl von Fahrzeugen (50), und/oder Abrufen von Informationen von zumindest einer externen Informationsquelle;
Bestimmen, basierend auf den empfangenen FCD Daten und/oder den von der zumindest einen externen Informationsquelle abgerufenen Informationen, von Merkmalen des Umfeldmodells; und
Aktualisieren der in der Datenbank (16) gespeicherten Informationen des Umfeldmodells basierend auf den bestimmten Merkmalen;
Verifizieren der Bestimmung von Merkmalen, die auf Basis der empfangenen FCD Daten eines Fahrzeuges (50) erfolgt ist, durch einen Vergleich mit dem Ergebnis der Bestimmung von Merkmalen auf Basis der empfangenen FCD Daten zumindest eines anderen Fahrzeugs (50) und/oder durch einen Vergleich mit in der Datenbank (16) gespeicherten Information, um einen Fehler in Informationen des in der Datenbank (16) gespeicherten Umfeldmodells zu erkennen,
**dadurch gekennzeichnet, dass**,
wenn ein Fehler erkannt wird, zumindest eines der Fahrzeuge (50) angewiesen wird, FCD Daten mit einer höheren Erfassungsrate oder mit einem größeren Informationsumfang zu erfassen und zu senden.

10. Verfahren nach Anspruch 9, wobei die Datenbank (16) ferner Informationen umfasst über eine zeitliche und/oder räumliche Auslastung, Verfügbarkeit und/oder zur Verfügung stehende Bandbreite eines Mobilfunknetzes enthält, das zur Verbreitung der Informationen zumindest einer Fahrerassistenzfunktionen der Fahrzeuge (50) verwendet wird, wobei die Applikationseinheiten (11, 12), basierend auf der Information über die Auslastung, Verfügbarkeit und/oder verfügbarer Bandbreite, die an die Fahrzeuge (50) zu sendende Informationen im Detaillierungsgrad vermindern oder erhöhen, oder zeitlich früher verbreiten; oder wobei die Datenbank (16) ferner Informationen umfasst über eine zeitliche und/oder räumliche Auslastung, Verfügbarkeit oder zur Verfügung stehende Bandbreite eines Mobilfunknetzes enthält, das zum Empfang der FCD Daten verwendet wird, wobei zumindest ein Fahrzeug (50) angewiesen wird, einen Umfang oder eine Erfassungsrate der FCD Daten zu erhöhen oder zu erniedrigen basierend auf der Auslastung, Verfügbarkeit oder verfügbaren Bandbreite des Mobilfunknetzes.

## Claims

1. A backend device (10) for providing information for driver assistance functions of vehicles (50) comprising:
a plurality of application units (11, 12), which are each designed to provide information for at least one driver assistance function of the vehicle (50) for transmission to the vehicles (50); and
a database (16) for storing information of an environment model; and
an interface unit (14), which is associated with the database (16) and is designed to enable access to information stored in the database (16),
wherein the application units (11, 12) are each connected to the interface unit (14) in order to call up information stored in the database (16) via the interface unit (14);
a data reception unit (13), which is designed to receive FCD data, more especially trajectory data and/or environment data, from multiple vehicles (50); and
a data processing unit (15), which is designed to process FCD data received from the data reception unit (13),
to determine features of the environment model, and, on the basis of the determined features, to update the information of the environment model stored in the database (16);
wherein the data processing unit (15) is designed to verify a determination of features performed on the basis of received FCD data of a vehicle (50) by a comparison with the result for determining features on the basis of the received FCD data of at least one other vehicle (50) in order to identify an error in information of the environment model stored in the database (16);
**characterised in that**
the data reception unit (13) is designed, if a fault has been identified by the data processing unit (15), to instruct at least one of the vehicles (50) to detect and to transmit FCD data at a higher detection rate or with a greater scope of information.

2. A backend device (10) according to one of the preceding claims, wherein the interface unit (14) forms a generic interface unit for calling up:
a position and a type of landmarks,
a position and a type of roadway markings,
a position and a type of road signs,
a position, a type and a status of light signal systems and/or variable message signs, and/or
a position and a type of traffic events.

3. A backend device (10) according to either one of the preceding claims, wherein the plurality of application units (11, 12) comprises an application unit for processing traffic information, an application unit for processing information regarding self-localisation and/or an application unit for processing parking space information.

4. A backend device (10) according to claim 1, wherein the backend device (10) also comprises an interface unit (17) which is designed to connect to at least one external information source, more especially a server (30) for providing traffic information, a server (40) for providing parking space information, and/or a server for providing weather information, and to call up information provided by the at least one server, and wherein
the data processing unit (15) is also designed to process information received from the interface unit (17) and to determine features of the environment model on the basis thereof.

5. A backend device (10) according to claim 1 or 4, wherein the data processing unit (15) is designed to determine at least one of the following features from the received FCD data and/or from the received information of the at least one external information source:
number of lanes, bend radii,
speed profiles,
occupancy of a parking space.

6. A backend device (10) according to any one of claims 1, 4 and 5, further comprising:
a road sign learning unit (19) for learning the position and type of road signs; and/or
a switching time learning unit (21) for learning switching times of light signal systems and/or variable message signs; and/or
a roadway condition learning unit (22) for learning a roadway condition, more especially position, size and/or depth of potholes on the roadway.

7. A backend device (10) according to any one of the preceding claims, wherein the database (16) also contains information regarding a temporal and/or spatial occupancy, availability or available bandwidth of a mobile network, which is used to distribute the information of the application units (11, 12) to the vehicles (50), and wherein
the application units (11, 12) are designed, on the basis of the information regarding the occupancy, availability or available bandwidth, to reduce or to increase the level of detail of the information to be transmitted to the vehicles (50) or to distribute it earlier in time.

8. A backend device (10) according to any one of claims 1, 4, 5 and 6, wherein the database (16) also contains information regarding a temporal and/or spatial occupancy, availability and/or available bandwidth of a mobile radio, which is used to receive the FCD data, and wherein the data reception unit (13) is designed to instruct at least one vehicle (50) to increase or to lower a scope or a detection rate of the FCD data on the basis of the occupancy, availability and/or available bandwidth.

9. A method for providing information for driver assistance functions of vehicles (50), comprising the following steps:
providing information of an environment model in a database (16);
calling up, by a plurality of application units (11, 12), information stored in the database (16) by access to an interface unit (14) associated with the database (16); and
providing, by the plurality of application units (11, 12), information for at least one driver assistance function of the vehicles (50) by the plurality of application units (11, 12) for transmission to the vehicles (50);
receiving FCD data, more especially trajectory data and/or environment data, from multiple vehicles (50), and/or calling up information from at least one external information source;
determining, on the basis of the received FCD data and/or the information called up from the at least one external information source, features of the environment model; and
updating the information of the environment model stored in the database (16) on the basis of the determined features;
verifying the determination of features performed on the basis of the received FCD data of a vehicle (50) by a comparison with the result for determining features on the basis of the received FCD data of at least one other vehicle (50)
and/or by a comparison with information stored in the database (16) in order to identify an error in information of the environment model stored in the database (16),
**characterised in that**
if a fault is identified, at least one of the vehicles (50) is instructed to detect and to transmit FCD data at a higher detection rate or with a greater scope of information.

10. A method according to claim 9, wherein the database (16) also comprises information regarding a temporal and/or spatial occupancy, availability and/or available bandwidth of a mobile network which is used to process the information of at least one driver assistance function of the vehicles (50), wherein the application units (11, 12), on the basis of the information regarding the occupancy, availability and/or available bandwidth, reduce or increase the level of detail of the information to be transmitted to the vehicles (50) or process said information earlier in time; or wherein the database (16) also comprises information regarding a temporal and/or spatial occupancy, availability or available bandwidth of a mobile network which is used to receive the FCD data, wherein at least one vehicle (50) is instructed to increase or to reduce a scope or a detection rate of the FCD data on the basis of the occupancy, availability or available bandwidth of the mobile network.

## Revendications

1. Etage de sortie (10) permettant de fournir des informations destinées à des fonctions d'assistance du conducteur de véhicule (50) comprenant :
un ensemble d'unités d'application (11, 12) qui sont chacune réalisées pour fournir et pour transmettre aux véhicules (50) des informations destinées à au moins une fonction d'assistance du conducteur des véhicules (50), et
une banque de données (16) permettant de stocker des informations d'un modèle d'environnement, et
une unité d'interfaces (14) qui est associée à la banque de données (16) et est réalisée pour permettre un accès aux informations stockées dans la banque de données (16),
les unités d'application (11, 12) étant chacune reliées à l'unité d'interfaces (14) pour pouvoir extraire par l'intermédiaire de l'unité d'interfaces (14), des informations stockées dans la banque de données (16),
une unité de réception de données (13) qui est réalisée pour permettre de recevoir des données FCD, en particulier des données de trajectoire et/ou des données d'environnement provenant d'un ensemble de véhicules (50), et
une unité de traitement de données (15) qui est réalisée pour permettre de traiter les données FCD reçues par l'unité de réception de données (13), de déterminer les caractéristiques du modèle d'environnement, et à partir des caractéristiques déterminées, d'actualiser les informations du modèle d'environnement stockées dans la banque de données (16),
l'unité de traitement de données (15) étant réalisée pour permettre de vérifier la détermination de caractéristiques effectuée sur le fondement de données FCD reçues d'un véhicule (50) par une comparaison avec le résultat de la détermination de caractéristiques sur le fondement des données FCD reçues d'au moins un autre véhicule (50) pour identifier un défaut dans des informations du modèle d'environnement stockées dans la banque de données (16),
**caractérisé en ce que**
l'unité de réception de données (13) est réalisée pour permettre, lorsqu'un défaut a été identifié par l'unité de traitement de données (15) de donner instruction à au moins l'un des véhicules (50) de détecter et de transmettre des données FCD avec un taux de détection plus élevé ou avec un plus grand environnement d'information.

2. Etage de sortie (10) conforme à la revendication précédente,
dans lequel l'unité d'interfaces (14) forme une unité d'interface générique pour permettre d'extraire :
la position et le type de points de repère,
la position et le type de marquages routiers,
la position et le type de panneaux de signalisation,
la position, le type et le statut d'installations de signalisation lumineuses et/ou panneaux de signalisation variables, et/ou
la position et le type d'événements de la circulation.

3. Etape de sortie (10) conforme à l'une des revendications précédentes,
dans lequel l'ensemble d'unités d'application (11, 12) comporte une unité d'application permettant de diffuser des informations de trafic, une unité d'application permettant de diffuser des informations de localisation propre et/ou une unité d'application permettant de diffuser des informations d'emplacements de stationnement.

4. Etape de sortie (10) conforme à la revendication 1,
comportant en outre une unité d'interfaces (17) qui est réalisée pour pouvoir se relier à au moins une source d'informations externe, en particulier un serveur (30) permettant de fournir des informations de trafic, un serveur (40) permettant de fournir des informations d'emplacements de stationnement et/ou un serveur permettant de fournir des informations météorologiques, et avoir accès aux informations fournies par ce serveur, et
l'unité de traitement de données (15) est en outre réalisée pour permettre de traiter les informations reçues à partir de l'unité d'interfaces (17) et de déterminer des caractéristiques du modèle d'environnement à partir de celles-ci.

5. Etape de sortie (10) conforme à la revendication 1 ou 4,
dans lequel l'unité de traitement de données (15) est réalisée pour permettre de déterminer à partir des données FCD reçues et/ou à partir des informations reçues provenant de la source d'informations externe au moins l'une des caractéristiques suivantes :
le nombre de voies de circulation, les rayons des virages, les profils de vitesse, l'occupation d'un emplacement de stationnement.

6. Etape de sortie (10) conforme à l'une des revendications 1, 4 et 5 comprenant en outre :
- une unité acquisition de panneaux de signalisation (19) permettant d'acquérir la position et le type de panneaux de signalisation, et/ou
- une unité d'acquisition de temps de commutation (21) permettant d'acquérir les temps de commutation d'installations de signalisation lumineuses et/ou de panneaux de signalisation variables, et/ou
- une unité d'acquisition de l'état de la chaussée (22) permettant d'acquérir l'état de la chaussée, en particulier, la position, la dimension et/ou la profondeur de nids de poule sur la chaussée.

7. Etape de sortie (10) conforme à l'une des revendications précédentes,
dans lequel la banque de données (16) renferme en outre des informations concernant l'utilisation dans le temps et/ou dans l'espace, la disponibilité ou la largeur de bande disponible d'un réseau de téléphonie mobile qui est utilisé pour diffuser les informations des unités d'application (11, 12) aux véhicules (50), et
les unités d'application (11, 12) sont réalisées pour permettre, sur le fondement des informations concernant l'utilisation, la disponibilité ou la largeur de bande disponible de diminuer ou d'augmenter le degré de précision des informations à transmettre aux véhicules (50) ou de les diffuser plus tôt dans le temps.

8. Etape de sortie (10) conforme à l'une des revendications 1, 4, 5 et 6 dans lequel la banque de données (16) renferme en outre des informations concernant l'utilisation dans le temps et/ou dans l'espace, la disponibilité et/ou la largeur de bande disponible d'un réseau de téléphonie mobile qui est utilisé pour recevoir les données FCD, et l'unité de réception de données (13) est réalisée pour permettre de donner instruction à au moins un véhicule (50), d'augmenter ou de diminuer l'ampleur et/ou le taux de détection des données FCD sur le fondement de l'utilisation, de la disponibilité et/ou de la largeur de bande disponible.

9. Procédé permettant de fournir des informations destinées à des fonctions d'assistance du conducteur de véhicules (50) comprenant des étapes consistant à :
fournir des informations d'un modèle d'environnement dans une banque de données (16),
extraire, par un ensemble d'unités d'application (11, 12) des informations stockées dans la banque de données (16) en accédant à une unité d'interfaces (14) associée à la banque de données (16), et
fournir pour les transmettre aux véhicules (50) par l'ensemble d'unités d'application (11, 12) des informations destinées à au moins une fonction d'assistance du conducteur des véhicules (50),
recevoir des données FCD, en particulier des données de trajectoire et/ou des données d'environnement provenant d'un ensemble de véhicules (50), et/ou
extraire des informations provenant d'au moins une source d'information externe,
déterminer des caractéristiques du modèle d'environnement en se fondant sur des données FCD reçues et/ou les informations extraites de la source d'informations externes, et
actualiser les informations du modèle d'environnement stockées dans la base de données (16) en se fondant sur les caractéristiques déterminées,
vérifier la détermination de caractéristiques qui est effectuée sur le fondement des données FCD reçues d'un véhicule (50), par une comparaison avec le résultat de la détermination de caractéristiques sur le fondement de données FCD reçues d'au moins un autre véhicule (50), et/ou par une comparaison avec des informations stockées dans la banque de données (16) pour identifier un défaut dans des informations du modèle d'environnement stockées dans la banque de données (16),
**caractérisé en ce que**
lorsqu'un défaut est identifié, on donne instruction au moins l'un des véhicules (50) de détecter et de transmettre des données FCD avec un taux de détection plus élevé ou avec un plus grand environnement d'information.

10. Procédé conforme à la revendication 9,
selon lequel la banque de données (16) renferme en outre des informations concernant l'utilisation dans le temps et/ou dans l'espace, la disponibilité et/ou la largeur de bande disponible d'un réseau de téléphonie mobile qui est utilisé pour diffuser les informations à au moins une fonction d'assistance du conducteur du véhicule (50), les unités d'application (11, 12) diminuant ou augmentant en se fondant sur les informations concernant l'utilisation, la disponibilité et/ou la largeur de bande disponible le degré de précision des informations à transmettre aux véhicules (50), ou les diffusant plus tôt dans le temps, et la banque de données (16) renfermant en outre des informations concernant l'utilisation dans le temps et/ou dans l'espace, la disponibilité ou la largeur de bande disponible d'un réseau de téléphonie mobile qui est utilisé pour recevoir les données FCD, et à au moins un véhicule (50) étant donné instruction d'augmenter ou de diminuer l'ampleur ou le taux de détection des données FCD sur le fondement de l'utilisation, de la disponibilité ou de la largeur de bande disponible du réseau de téléphonie mobile.
